# EUROPEAN PATENT SPECIFICATION

(11) **EP 2 261 646 B1**
(45) Date of publication and mention of the grant of the patent: **29.07.2015**
(21) Application number: 09726231.5
(22) Date of filing: 27.03.2009
(51) Int. Cl.: G01N 27/26, G01N 27/327, G01N 27/416

(54) **Measurement device, measurement system, and concentration measurement method**
Messvorrichtung, Messsystem und Konzentrationsmessverfahren
Dispositif de mesure, systeme de mesure et procédé de mesure de concentration

(30) Priority: 27.03.2008 JP 2008082814
(43) Date of publication of application: 15.12.2010
(73) Proprietor: Panasonic Healthcare Holdings Co., Ltd., Tokyo 105-8433 (JP)
(72) Inventor: NAKAMURA, Toshifumi, Chuo-ku Osaka-shi Osaka 540-6207 (JP); YAMANISHI, Eriko, Chuo-ku Osaka-shi Osaka 540-6207 (JP); TOKUNAGA, Hiroyuki, Chuo-ku Osaka-shi Osaka 540-6207 (JP); ITO, Yoshihiro, Chuo-ku Osaka-shi Osaka 540-6207 (JP)
(74) Representative: Eisenführ Speiser
(86) International application number: PCT/JP2009/001427
(87) International publication number: WO 2009/119117

(56) References cited:
- EP-A2- 0 537 761
- WO-A1-2004/040286
- WO-A1-2005/045414
- WO-A1-2005/103669
- JP-A- 5 188 037
- JP-A- 5 340 915
- JP-A- 11 344 462
- JP-A- 2004 101 437
- JP-A- 2006 105 615

## Description

### TECHNICAL FIELD

The present invention relates to a measurement device, a measurement system, and a concentration measurement method, for measuring the concentration of a target substance in a liquid sample.

### BACKGROUND ART

Measurement systems that make use of a redox reaction (oxidoreduction) involving an enzyme have been proposed as conventional devices for measuring blood and other such liquid samples.

These measurement systems include a biosensor that has an insulated substrate, a working electrode and a counter electrode formed on the insulated substrate, a reaction layer provided on the working electrode and the counter electrode, and the reaction layer contains an oxidoreductase and an electron mediator, a substrate of the oxidoreductase is a target substance; and a system that applies an electrical voltage to between the working electrode and the counter electrode, detects an electrical current generated by the electrical voltage, and measures a glucose concentration based on the electrical current.

However, with a measurement system such as this, the current value may fluctuate depending on the presence of interfering substances such as compounds that are readily oxidized (such as ascorbic acid and uric acid), so accurate concentration measurement is sometimes difficult.

In view of this, in order to obtain an accurate concentration of the target substance, it has been proposed to correct a measurement result of the target substance by using a value of current obtained as follows: using a biosensor that is equipped with a first electrode system for detecting the value of current flowing with a redox reaction of a blood component, a second electrode system for detecting the blood cell count, and a third electrode system for detecting an amount of interfering substances, and in which at least a mediator is not disposed over the working electrode of this third electrode system, and applying voltage of one voltage value to the third electrode system, and obtaining a current value that reflects the concentration of interfering substances (Patent Citations 1 and 2).
Patent Citation 1: International Laid-Open Patent Application 2005-103669
Patent Citation 2: Japanese Laid-Open Patent Application H11-344462

### SUMMARY

However, the effect of interfering substances sometimes could not be eliminated with a conventional system due to factors such as the fact that the readily oxidizable potential varies from one kind of interfering substance to the next.

Accordingly, there has been a need for a device and method with which a target substance in a liquid sample could be more accurately measured.

To achieve this object, the first measurement device can be used for measuring the concentration of a target substance in a sample deposited on a biosensor having first and second electrode systems, the measurement device having: a mounting component configured to be mounted with the biosensor; a voltage application component configured to perform a first voltage application operation of applying a first voltage to the first electrode system and a second voltage application operation of applying at least two kinds of second voltage of mutually different levels at mutually different timings to the second electrode system; a concentration acquisition component configured to acquire the concentration of the target substance on the basis of the current value of the first electrode system when the first voltage is applied; and a correction component configured to correct the concentration acquired by the concentration acquisition component on the basis of the amount of change in the current value of the second electrode system between the at least two different timings during the second voltage application operation.
The second measurement device can be used for measuring the concentration of a target substance in a sample deposited on a biosensor having first and second electrode systems, the measurement device having: a mounting component configured to be mounted with the biosensor; a voltage application component configured to perform a first voltage application operation of applying a first voltage to the first electrode system, and a second voltage application operation of applying a second voltage that is a sweep voltage; a concentration acquisition component configured to acquire the concentration of the target substance on the basis of the current value of the first electrode system when the first voltage is applied; and a correction component configured to correct the concentration acquired by the concentration acquisition component on the basis of the amount of change in the current value of the second electrode system attributable to sweep of the second voltage.

Also, the first measurement system comprises a biosensor and a measurement device.

Also, the first concentration measurement method can be used in a measurement device for measuring the concentration of a target substance in a sample deposited on a biosensor having first and second electrode systems, the method having: a first voltage application step of applying a first voltage to the first electrode system, a concentration acquisition step of acquiring the concentration of the target substance on the basis of the current value of the first electrode system in the first voltage application step, a second voltage application step of applying at least two kinds of second voltage of mutually different levels at mutually different timings to the second electrode system, and a correction step of correcting the concentration acquired in the concentration acquisition step on the basis of the amount of change in the current value of the second electrode system between the at least two different timings during the second voltage application step.

Also, the second concentration measurement method can be used in a measurement device for measuring the concentration of a target substance in a sample deposited on a biosensor having first and second electrode systems, the method comprising a first voltage application step of applying a first voltage to the first electrode system, a concentration acquisition step of acquiring the concentration of the target substance on the basis of the current value of the first electrode system in the first voltage application step, a second voltage application step of applying a second voltage that is a sweep voltage to the second electrode system, and a correction step of correcting the concentration acquired in the concentration acquisition step on the basis of the amount of change in the current value of the second electrode system attributable to sweep of the second voltage.

### BRIEF DESCRIPTION OF DRAWINGS

FIG. 1 is an oblique view of the outer appearance of the measurement system in an embodiment;
FIG. 2 is an exploded oblique view of the configuration of elements in a biosensor;
FIG. 3 is a block diagram of the configuration of elements in a measurement device;
FIG. 4A is a profile of the value of voltage applied during detection of an interfering substance;
FIG. 4B is an example of a current response curve versus the voltage shown in the profile of FIG. 4A;
FIG. 5A is a profile of the value of voltage applied during detection of a target substance;
FIG. 5B is an example of a current response curve versus the voltage shown in the profile of FIG. 5A;
FIG. 6 is a specific example of a correction amount table;
FIG. 7A is a graph of the discrepancy between uncorrected/corrected measurement glucose concentrations for acetaminophen-containing samples in a working example and the true values of glucose concentration;
FIG. 7B is a graph of the discrepancy between uncorrected/corrected measurement glucose concentrations for ascorbic acid-containing samples in a working sample and the true values of glucose concentration;
FIG. 8 is another profile for voltage value during detection of interfering substance;
FIG. 9 is an exploded oblique view of a biosensor in a comparative embodiment;
FIG. 10A is a profile of voltage during the measurement operation in the comparative embodiment;
FIG. 10B is a response curve versus the voltage shown in the profile of FIG. 10A;
FIG. 11 is correction amount table in the comparative embodiment;
FIG. 12A is a graph of the discrepancy between uncorrected/corrected measurement glucose concentrations for acetaminophen-containing samples in the comparative embodiment and the true values of glucose concentration; and
FIG. 12B is a graph of the discrepancy between uncorrected/corrected measurement glucose concentrations for ascorbic acid-containing samples in a comparative embodiment and the true values of glucose concentration.

### EXPLANATION OF REFERENCE

- 100: measurement system
- 10: biosensor
- 10a: sample introduction port
- 10b: sample supply path
- 11a: first working electrode
- 11b: second working electrode
- 11c: detecting electrode
- 11d: counter electrode
- 12: reagent layer
- 13: spacer
- 14: cover
- 20: measurement device
- 205: reference voltage source (part of a voltage application component)
- 206: computer (including part of a voltage application component; and a concentration acquisition component, a correction component, and a correction amount selector)
- 206a: CPU
- 206b: memory

### DETAILED DESCRIPTION OF THE EMBODIMENTS

### [1] First Embodiment

### (1-1) Measurement System

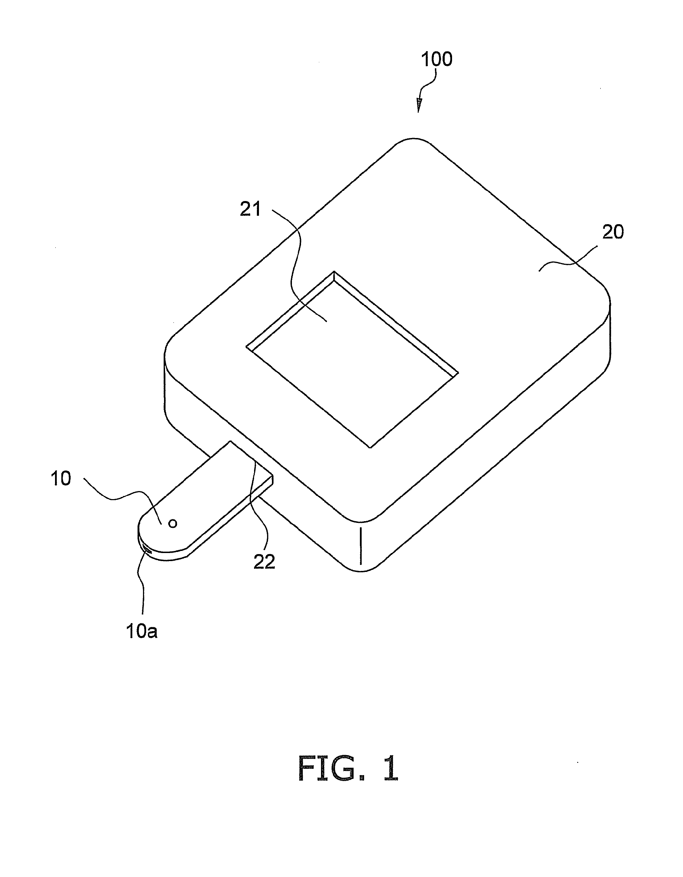

An overview of the measurement system 100 pertaining to this embodiment will be described through reference to FIG. 1. FIG. 1 is an oblique view of the outer appearance of the measurement system 100.

As shown in FIG. 1, the measurement system 100 comprises a biosensor 10 and a measurement device 20. The measurement device 20 has a display component 21 for displaying measurement results, and an insertion component (mounting component) 22 into which the biosensor 10 is inserted. A liquid crystal display panel can be used favorable as the display component 21. The biosensor 10 has a sample introduction port 10a at one end in the lengthwise direction. Of the two ends of the biosensor 10 in the lengthwise direction, the end on the opposite side from the one where the sample introduction port 10a is provided is inserted into insertion component 22 of the measurement device 20.

The liquid sample referred to here is not limited to any special kind of sample, and various samples can be used, such as blood, sweat, urine, and other such biological liquid samples; liquid samples originating in the environment, such as from a river, the sea, or a lake; and liquid samples originating in foods.

Nor is the target substance to be measured limited to any special kind of substance, and various substances can be accommodated by changing the oxidoreductase, etc., in the reagent layer 12 (discussed below) of the biosensor 10.

### (1-2) Biosensor

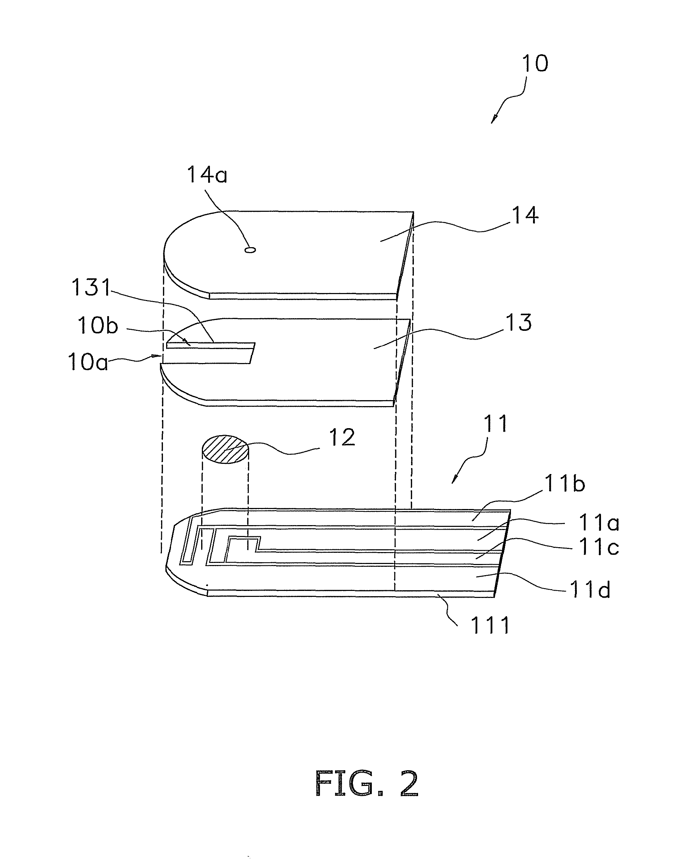

The structure of the biosensor 10 will be described in detail through reference to the exploded oblique view in FIG. 2.

As shown in FIG. 2, the biosensor 10 has a substrate (base plate) 11, a reagent layer 12 disposed on the substrate 11, a spacer 13 disposed so as to be opposite the face of the substrate 11 on the side where the reagent layer 12 is disposed, and a cover 14 disposed so as to sandwich the spacer along with the substrate 11. The sample introduction port 10a is provided at one end of the biosensor 10 in the lengthwise direction.

The substrate 11 has an insulated substrate 111 composed of polyethylene terephthalate or the like, and an electrode layer formed on the surface thereof. The electrode layer is divided up with a laser or the like to form a first working electrode 11a, a second working electrode 11b, a detecting electrode 11c, and a counter electrode 11d. More specifically, the first working electrode 11a, the second working electrode l1b, the detecting electrode 11c and the counter electrode 11d are formed so that the end of the counter electrode 11d, the end of the second working electrode 11b, the end of the first working electrode 11a, and the end of the detecting electrode 11c are disposed in that order along the lengthwise direction of a sample supply path 10b (discussed below), from near the sample introduction port 10a and heading away from the sample introduction port 10a. Part of the counter electrode 11d is also disposed between the second working electrode 11b and the first working electrode 11a in the lengthwise direction of the sample supply path 10b.

As discussed below, the first working electrode 11 a and the counter electrode 11d function as a first electrode system used in the detection of a target substance, and the second working electrode 11b and the counter electrode 11d function as a second electrode system used in the detection of interfering substances.

The reagent layer 12 is a layer that contains an enzyme, and is disposed so as to be in contact with the first working electrode 11a, the detecting electrode 11c and the counter electrode 11d. The reagent layer 12 is disposed so as not to be in contact with the second working electrode 11b. The reagent layer 12 may contain an electron mediator or other such component in addition to the enzyme.

An oxidoreductase in which the target substance is the substrate can be used favorably as the enzyme. Examples of such oxidoreductases include glucose oxidase or glucose dehydrogenase when glucose is the target substance; lactic acid oxidase or lactic acid dehydrogenase when lactic acid is the target substance; cholesterol esterase or cholesterol oxidase when cholesterol is the target substance; alcohol oxidase when alcohol is the target substance; and bilirubin oxidase when bilirubin is the target substance. The enzyme is not limited to these, however, and is appropriately selected according to the target substance. Other examples besides these of the target substance include triglyceride, uric acid, and so forth.

At least one compound selected from the group consisting of potassium ferricyanide, p-benzoquinone, p-benzoquinone derivatives, oxidizing phenazine methosulfate, methylene blue, ferricinium, and ferricinium derivatives can be used favorably, for example, as an electron mediator.

The spacer 13 is a plate-shaped member having a substantially rectangular cut-out 131. In a state in which the various members of the biosensor 10 have been assembled, the spacer 13 forms a sample supply path 10b surrounded by the substrate 11, the cover 14, and the inner faces of the cut-out 131. One end of the sample supply path 10b serves as the sample introduction port 10a.

The cover 14 is a flat, plate-shaped member. The cover 14 has an air hole 14a that passes through from the face opposite the spacer 13 to the face on the other side. The air hole 14a is disposed above the sample supply path 10b (discussed below), and in particular above the opposite end of the sample supply path 10b from the side with the sample introduction port 10a.

When the biosensor 10 is used, the user deposits a liquid sample in the sample introduction port 10a. The liquid sample deposited in the sample introduction port 10a moves through the sample supply path 10b into the biosensor 10 by capillary action, reaching the second working electrode 11b and the counter electrode 11d, and then reaching the first working electrode 11a and the detecting electrode 11c.

When the measurement system 100 is used to measure a blood glucose level, for example, the user pricks his own finger, hand, arm, etc., squeezes out a small quantity of blood, and supplies this blood as the liquid sample for measurement.

### (1-3) Measurement Device

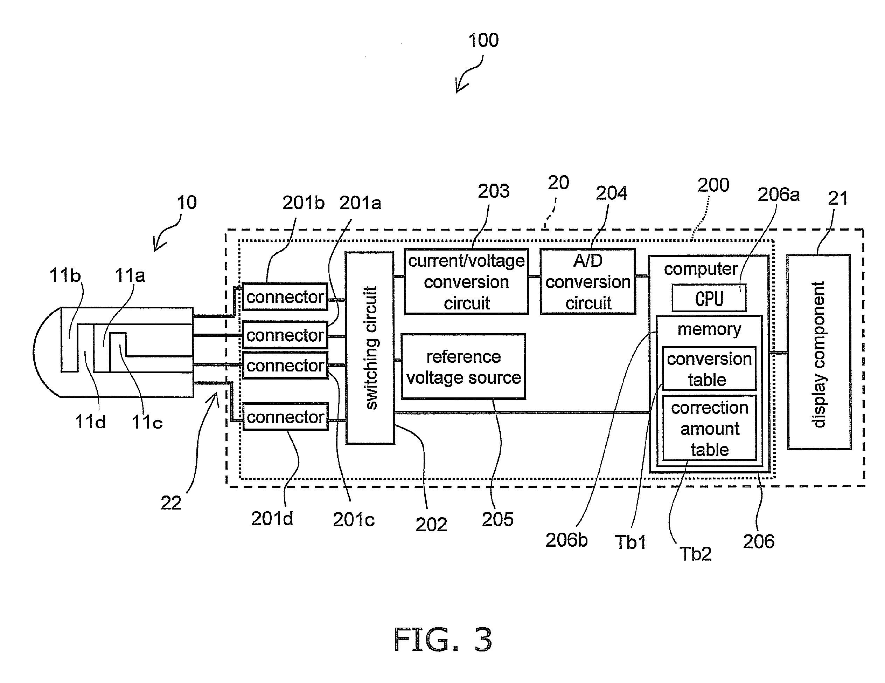

The constituent elements of the measurement device 20 will be described through reference to the block diagram of FIG. 3.

As shown in FIG. 3, in addition to the above constitution, the measurement device 20 has a control circuit 200 that applies voltage between at least of the electrodes 11a, 11b, 11c, and 11d of the biosensor 10.

As shown in FIG. 3, the control circuit 200 has four connectors 201a, 201b, 201c, and 201d, a switching circuit 202, a current/voltage conversion circuit 203, an analog/digital conversion circuit (hereinafter referred to as A/D conversion circuit) 204, a reference voltage source 205 (part of a voltage application component), and a computer 206. The computer 206 functions as a correction amount selector, a correction component, a concentration acquisition component, and part of a voltage application component, as will be discussed below.

As shown in FIG. 3, the connectors 201a, 201b, 201c, and 201d are connected to the first working electrode 11a, the second working electrode 11b, the detecting electrode 11c, and the counter electrode 11d, respectively, in a state in which the biosensor 10 has been inserted into the insertion component 22.

The switching circuit 202 is designed to switch the electrode connected to the reference voltage source 205, or to switch the voltage value that is applied to the electrodes.

The current/voltage conversion circuit 203 converts the amount of current flowing between the two electrodes connected to the current/voltage conversion circuit 203 into a voltage value when a signal directing that a current value be acquired is provided from the control circuit. After this, the converted voltage value is converted into a digital value by the A/D conversion circuit 204, inputted to a CPU 206a, and stored in the memory of the computer 206.

The computer 206 has the CPU (central processing unit) 206a and a memory 206b. The memory holds a conversion table Tb1 used to determine the concentration of the target substance in a blood sample, and a correction amount table Tb2 used to determine the correction amount for this concentration.

The computer 206 calculates the tentative concentration of the target substance by referring to the conversion table Tb1, on the basis of the above-mentioned stored voltage value. The computer 206 determines the ultimate concentration of the target substance by using a correction amount found in the correction amount table Tb2. This processing will be discussed in greater detail below.

In addition to its functions as concentration acquisition component and correction component, the computer 206 also has the functions of controlling the switching of the switching circuit 202, inputting from the A/D conversion circuit 204, controlling the voltage of the reference voltage source 205 serving as the voltage application component, measuring the length of time during concentration measurement or correction amount selection (timer function), outputting display data to the display component 21, and communicating with external devices. The computer 206 also exercises controls over the entire measurement device 20.

The various functions of the computer 206 are realized by having the CPU 206a read and execute programs stored in a ROM (read only memory; not shown) or the like.

### (1-4) Concentration Measurement

When the biosensor 10 is inserted into the insertion component 22 of the measurement device 20, the switching circuit 202 receives a command from the CPU 206a of the computer 206 to connect the first working electrode 11a to the reference voltage source 205 via the connector 201a, and to connect the detecting electrode 11c to the current/voltage conversion circuit 203 via the connector 201c. In this connection state, when a liquid sample is deposited in the sample introduction port 10a of the biosensor 10, this liquid sample moves through the sample supply path 10b under capillary action, and reaches the detecting electrode 11c, there is a change in the current value between the first working electrode 11a and the detecting electrode 11c. As a result, the voltage value inputted to the computer 206 changes (increases). This change is detected by the CPU 206a. This detection triggers the following operations (a) and (b).

### (a) Detection of Interfering Substances

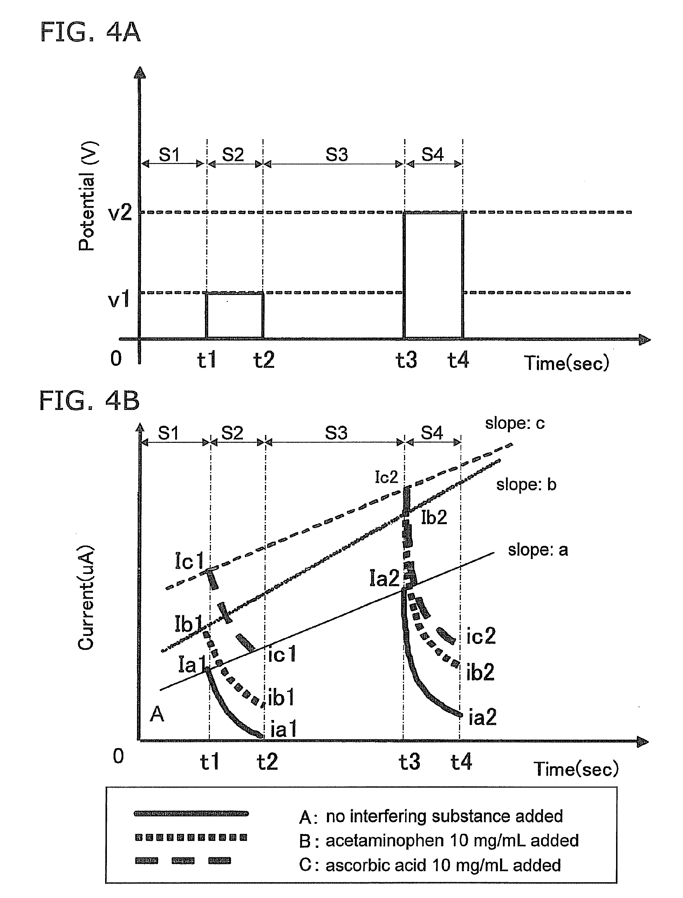

FIG. 4A shows a profile of the voltage value during detection of interfering substances. The vertical axis in FIG. 4A is the applied voltage value (V), and the horizontal axis is the time (seconds).

As shown in FIG. 4A, the point at which the introduction of a liquid sample was detected is set to 0 (zero), and the CPU 206a of the computer 206 begins counting the times t1, t2, t3, and t4.

The times t1 to t4 are not limited to any specific numerical values, so long as they satisfy the relation t1 < t2 < t3 < t4. The times t1 to t4 can be suitable set according to the length of the sample supply path 10b (the length of the biosensor 10 in the lengthwise direction), the width of the sample supply path 10b (the length of the biosensor 10 in the lateral direction), the composition of the reagent layer 12, the ease of dissolving the reagent layer 12 in the liquid sample, and so on.

Up until the counting of the time t4 ends, the switching circuit 202 maintains the connection of the second working electrode 11b and the reference voltage source 205, as well as the connection of the counter electrode 11d and the current/voltage conversion circuit 203, at a command from the CPU 206a.

Until the time t1 has elapsed from the start of the count (time 0 (zero)), that is, in the first step S1, the voltage applied between the second working electrode 11b and the counter electrode 11d is kept at an open circuit voltage at a command from the CPU 206a.

After the end of counting the time t1, until the end of the counting of the time t2, that is, in the second step S2 (second voltage application step), a closed circuit voltage v1 (second voltage) is applied between the second working electrode 11b and the counter electrode 11d.

After the end of counting the time t2, until the end of the counting of the time t3, that is, in the third step S3, the voltage applied between the second working electrode 11b and the counter electrode 11 d is kept at an open circuit voltage.

After the end of counting the time t3, until the end of the counting of the time t4, that is, in the fourth step S4 (second voltage application step), a closed circuit voltage v2 (second voltage) is applied between the second working electrode 11b and the counter electrode 11d.

The times t1 to t4 are preferably set so that the voltage application of the second step S2 and the fourth step S4 is carried out before the redox reaction of the target substance in the liquid sample has an effect, that is, before the dissolved reagent layer reaches the second working electrode.

More specifically, the length of the first step S1 (that is, the time t1) may be set to fall within a range of at least 0 seconds and no more than 1 second, the length of the second step S2 (that is, the time (t2 - t1)) may be set to fall within a range of at least 0.5 second and no more than 1.0 second, the length of the third step S3 (that is, the time (t3 - t2)) may be set to fall within a range of at least 0.5 second and no more than 3.0 seconds, and the length of the fourth step S4 (that is, the time (t4 - t3)) may be set to fall within a range of at least 1.0 second and no more than 3.0 seconds

The voltages v1 and v2 are preferably at least the potential at which the redox reaction of the various interfering substances is carried out. Also, the voltages v1 and v2 are preferably set lower than the value at which electrolysis of water will occur. Consequently, an accurate measurement result can be obtained for interfering substances, without the liquid sample itself being electrolyzed. The voltage value at which electrolysis occurs will vary with the biosensor electrode structure and so forth, but is about 2.0 V, for example.

Also, the voltage v1 is preferably lower than the voltage v2. This is because the redox potential varies with the type of interfering substance. More specifically, the voltage v1 is preferably set to a value such that a redox reaction will occur with a certain interfering substance, but is not likely to occur with another interfering substance. The voltage v2 is set to a value at which a redox reaction will occur with both interfering substances. Setting the voltages v1 and v2 in this way means that the amounts of change (that is, the slope) in the current value (discussed below) will have mutually different values depending on the kind of interfering substance, so it is possible to correct the measured value for concentration of a target substance according to the type of interfering substance.

Thus, the voltage v1 is preferably set within a range of 0.1 V ≤ v1 ≤ 1.0 V, and more preferably within a range of 0.1 V ≤ v1 ≤ 0.3 V.

Also, the voltage v2 is preferably set within a range of 0.1 V ≤ v2 ≤ 1.0 V, and more preferably within a range of 0.4 V ≤ v2 ≤ 0.8 V.

FIG. 4B shows a specific current response curve. In the response curve of FIG. 4B, the vertical axis is the response current value (µA), and the horizontal axis is the time (seconds).

Curves A (solid line), B (fine dotted line), and C (thick dotted line) in FIG. 4B are curves indicating current values measured under the same conditions other than the fact that the liquid samples are different. Curve A is the response curve for a sample A that was blood whose glucose concentration was adjusted to 100 mg/dL (deciliter) and to which no interfering substances were added. Curve B is for a sample B obtained by adding acetaminophen to the blood of sample A such that the concentration was 10 mg/mL. Curve C is for a sample C obtained by adding ascorbic acid to the blood of sample A such that the concentration was 10 mg/mL. These samples underwent steps S5 to S7 (discussed below).

In all of the measurements, FAD-GDH (glucose dehydrogenase in which flavin adenine dinucleotide serves as a coenzyme; (hereinafter referred to as FAD-GDH)) was used as the oxidoreductase. Also, the first step S1 lasted 1 second, the second step S2 lasted 0.5 second, the third step S3 lasted 1 second, and the fourth step S4 lasted 1 second, so the current value measurement was conducted for a total of 3.5 seconds. The voltage v1 was 0.3 V, and the voltage v2 was 0.6 V.

As shown in FIG. 4B, the higher is the applied voltage, the greater is the detected current value, but the waveform varies depending on whether or not there is an interfering substance, and with the type of interfering substance.

The CPU 206a of the computer 206 calculates the slope from the maximum current value in the second step S2 up to the maximum current value in the fourth step S4, among the current values obtained for one kind of sample.

More specifically, as shown in FIG. 4B, in all of the waveforms, the current value in the second step S2 is greatest at the start of application of the voltage v1, and the current value in the fourth step S4 is greatest at the start of application of the voltage v2. The CPU 206a calculates the slope a from the current value Ia1 at the start of the second step S2 up to the current value Ia2 at the start of the fourth step S4 for waveform A, calculates the slope b from the current value Ib1 to Ib2 at the same timing for waveform B, and calculates the slope c from the current value Ic1 to Ic2 at the same timing for waveform C. The slopes a, b, and c are indicated by the straight lines in FIG. 4B.

Thus, the computer 206 can reduce the error in concentration correction by calculating the slope between maximum response current values for the various applied voltage values.

As discussed below, the current values at the end of the counting of the time t4 (the final response values ia2, ib2, and ic2) can also be used for concentration correction.

These slopes and final response values are stored in the memory 206b of the computer 206.

The term "slope" here is the increase in the vertical axis component (current value) divided by the increase in the horizontal axis component (time), so it is the increase in current value per unit of time.

Also, as discussed above, the value obtained by converting a current value into a voltage value is what is actually used by the computer 206 to calculate the slopes a to c. However, since a voltage value obtained by conversion reflects the level of the current, we have used the term "current value" here for the sake of convenience.

### (b) Detection of Target Substance

As discussed above, the following operation triggers a change in current value between the first working electrode 11a and the detecting electrode 11c. Specifically, the detection of the target substance is executed in parallel with the detection of an interfering substance discussed in section (a) above. The start timing of the target substance detection is not limited to this.

When it is detected that a liquid sample has reached the detecting electrode 11c, the CPU 206a outputs a command for the switching circuit 202 to connect the first working electrode 11a and the reference voltage source 205, and to connect the counter electrode 11d and the current/voltage conversion circuit 203, and the detection of the target substance (such as glucose) is performed.

When the liquid sample reaches the reagent layer 12, the reagent layer 12 dissolves in the liquid sample, which forms a reaction sample that includes the liquid sample and the oxidoreductase, and oxidants or reductants of the electron mediator gradually begin to be produced by the redox reaction within the reaction sample.

The CPU 206a can detect the concentration of these oxidants or reductants, that is, the concentration of the target substance, by detecting a change in the current value between the first working electrode 11a and the counter electrode 11d.

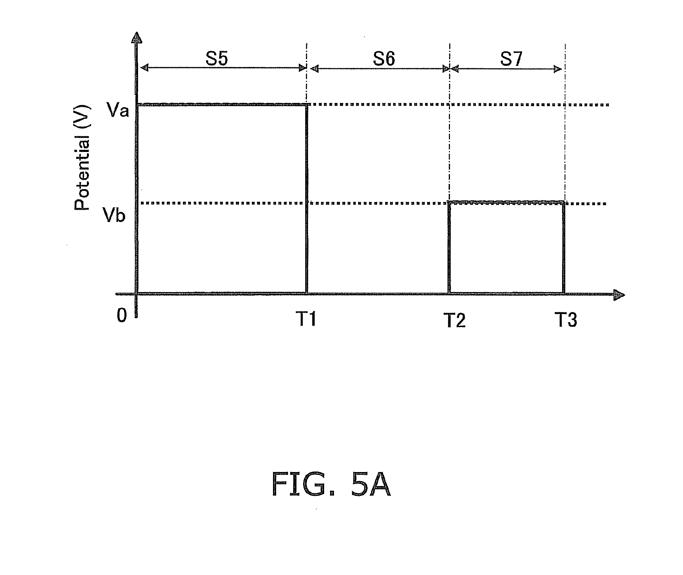

FIG. 5A shows a profile of the voltage values during detection of the target substance. The vertical axis in FIG. 5A is the applied voltage value (V), and the horizontal axis is the time (seconds).

As mentioned above, the point at which a change in current value between the first working electrode 11a and the detecting electrode 11c was detected is set to 0 (zero), and the CPU 206a of the computer 206 begins counting the times T1, T2, and T3.

There are no specific limits on the numerical values of the times T1 to T3, so long as they satisfy the relation T1 < T2 < T3, and they are values that give a current value satisfactory for measuring the concentration of the target substance. The times T1 to T3 are set by taking into account the type of target substance, the configuration of the biosensor 10, the composition of the reagent layer 12, and other such conditions.

As shown in FIG. 5A, between the start of the count (time 0 (zero)) and time T1, that is, in the fifth step S5 (the first voltage application step), a closed circuit voltage Va (first voltage) is applied between the first working electrode 11a and the counter electrode 11 d at a command from the CPU 206a.

After the end of the counting of the time T1, until the end of the counting of the time T2, that is, in the sixth step S6, the voltage applied between the first working electrode 11a and the counter electrode 11d is open circuit voltage.

After the end of the counting of the time T2, until the end of the counting of the time T3, that is, in the seventh step S7 (first voltage application step), a closed circuit voltage Vb (first voltage) is applied between the first working electrode 11a and the counter electrode 11d.

Here, the application of voltage in the fifth step S5 is preprocessing of the liquid sample. A current value obtained in the seventh step S7 is actually used in the measurement of the concentration of the target substance. Usually, the voltage Va is set to be higher than Vb. The voltage Vb is set so that reducing electron transporters produced by the enzyme reaction can be oxidized, or so that oxidizing electron transporters produced by the enzyme reaction can be reduced.

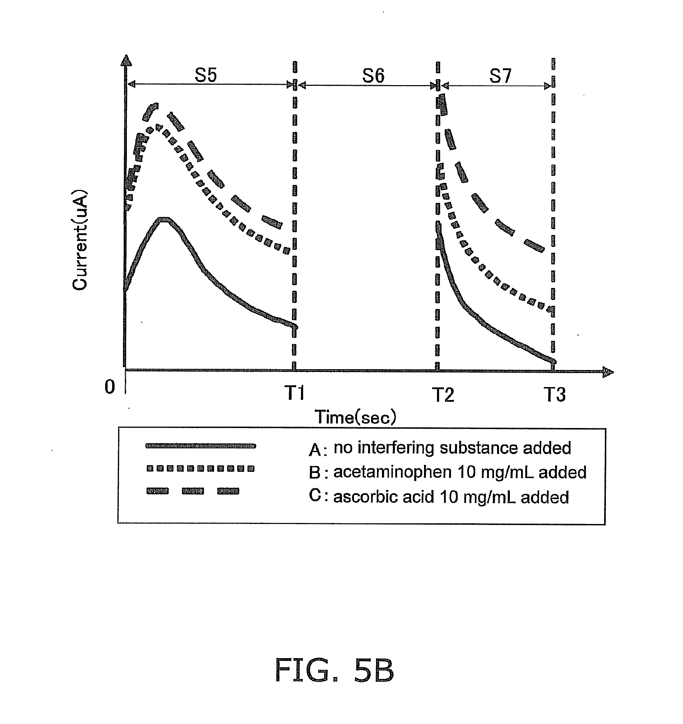

FIG. 5B shows a specific current response curve. In the response curve of FIG. 5B, the vertical axis is the response current value (µA), and the horizontal axis is the time (seconds). The sample composition, the enzyme used, and so forth are the same as discussed in section (a) above.

In the example shown in FIG. 5B, the fifth step S5 lasted 2 seconds, the sixth step S6 lasted 1 second, and the seventh step S7 lasted 2 seconds, so steps S5 to S7 lasted 5 seconds. The voltage Va was 0.60 V, and the voltage Vb was 0.40 V.

Curves A, B, and C in FIG. 5B are current values obtained by adding applied voltage between the first working electrode 11a and the counter electrode 11d. As discussed above, curves A, B, and C in FIG. 4B are current values obtained by adding applied voltage between the second working electrode 11b and the counter electrode 11d. That is, with the measurement device 20, two processes (a) and (b) can be executed in parallel, using different working electrodes.

### (c) Concentration Calculation

The CPU 206a selects as a tentative concentration the concentration corresponding to the current value at T3 obtained in the processing of section (b) above, from the conversion table Tb1, on the basis of this current value (concentration acquisition step).

In the example in FIG. 5B, the conversion table Tb1 includes current values and corresponding glucose concentrations. That is, the CPU 206a compares the current value obtained at the completion of the seventh step S7 (that is, the minimum current value obtained in the seventh step S7) with the current values in the conversion table Tb1, and selects the glucose concentration corresponding to the current value as the tentative concentration.

As shown in curves A and B of FIGS. 5B, the effect of response current value caused by the presence of various interfering substances (acetaminophen, ascorbic acid) is included in the tentative concentration, so the tentative concentration is desirably corrected for (that is, the effect by interfering substances is desirably cancelled out).

### (d) Correction

The CPU 206a selects a correction amount from the correction amount table Tb2 on the basis of the value of the slope obtained in the processing of section (a), uses this correction amount to correct the concentration obtained in the processing of section (c), and uses this result as the final measurement result.

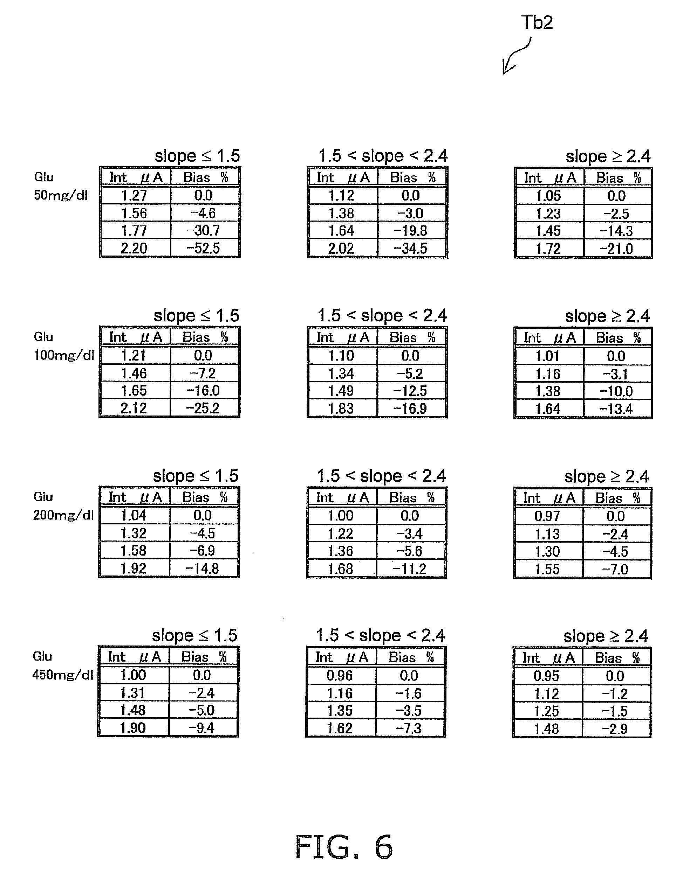

FIG. 6 shows a specific example of the correction amount table Tb2 used in the above-mentioned examples shown in FIGS. 4B and 5B. As shown in FIG. 6, the correction amount table Tb2 has correction amounts associated with both slope value and tentative concentration.

The CPU 206a selects a correction amount on the basis of the slope value obtained in the processing of section (a), the final response value obtained in the processing of section (a) (Int (µA)), and the tentative concentration obtained in the processing of section (c) (correction amount selection step).

The CPU 206a corrects the measurement result for the concentration of the target substance in (c) above on the basis of the selected correction amount (correction step).

### Working Examples

The processing in the examples in FIGS. 4B and 5B will be described in further detail.

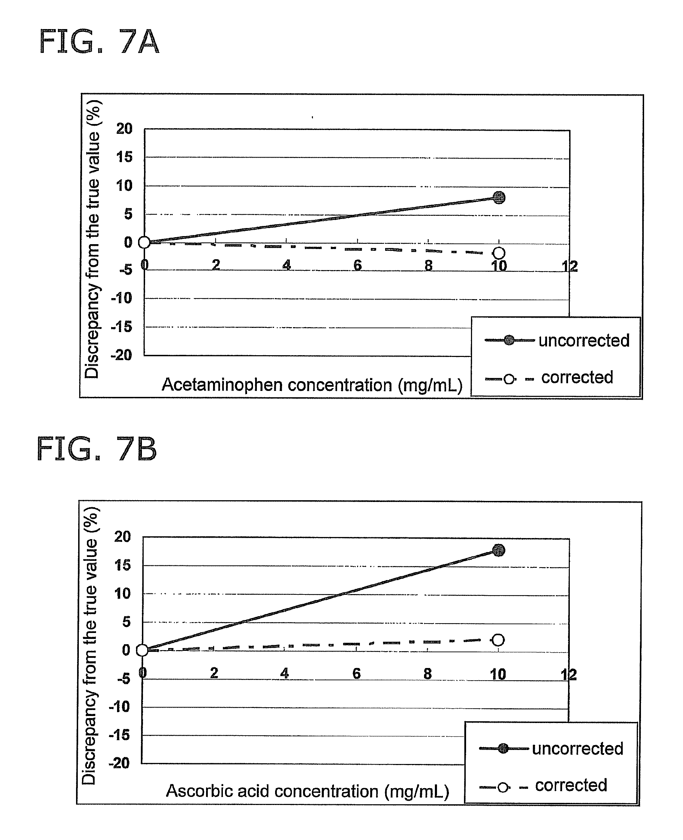

First, in the example in FIG. 5B, when a concentration has been selected form the conversion table Tb1 on the basis of the obtained current value, that is, when correction has not been performed, the obtained concentration and the discrepancy from the true value (%) are indicated by solid lines in FIGS. 7A and 7B. In FIGS. 7A and 7B, the horizontal axis is the concentration of interfering substances, and the vertical axis is the discrepancy from the true value (%). The discrepancy of the true value itself is, needless to be arguee,0%.

As shown in FIG. 7A, when the acetaminophen concentration was 10 mg/mL, the discrepancy from the true value was +8%. Also, as shown in FIG. 7B, when the ascorbic acid concentration was 10 mg/mL, the discrepancy from the true value was +18%.

Next, a case performing the processing of this embodiment will be described.

First, sample B, in which the interfering substance is acetaminophen, will be described. In the processing of section (a) above, as shown in FIG. 4B, the peak current value (maximum value) Ib1 in the second step S2 for sample B was 1.4 µA. That the peak value Ib1 is so small can be attributed to the characteristic of acetaminophen of having a high redox potential.

In the fourth step S4, however, when a high voltage of 0.6 V was applied, the peak value Ib2 exhibited a high value of 4.1 µA. The slope b found by subjecting these two peak values to linear regression was 2.6. The final response value ib2 was 1.38 µA.

The glucose concentration calculated in the processing of (c) above was 108 mg/dL, so a correction amount was selected that corresponded to a glucose concentration of 100 mg/dL, a slope of ≥ 2.4, and an Int of 1.38 µA. As shown in FIG. 6, since the correction amount is -10%, the concentration obtained as a result of correction is 97.2 mg/dL.

As shown in FIG. 7A, the corrected concentration thus obtained is closer to the true value than the uncorrected concentration is.

Next, sample C, in which the interfering substance is ascorbic acid, will be described.

In the processing of section (a) above, as shown in FIG. 4B, the peak current value (maximum value) Ic1 in the second step S2 for sample C was 3.6 µA. Also, in the fourth step S4, the peak value Ic2 was 4.2 µA. The slope c found by subjecting these two peak values to linear regression was 0.6. The final response value ic2 was 1.65 µA.

The glucose concentration calculated in the processing of (c) above was 118 mg/dL, so a correction amount was selected that corresponded to a glucose concentration of 100 mg/dL, a slope of ≤ 1.5, and an Int of 1.65 µA. As shown in FIG. 6, since the correction amount is -16%, the concentration obtained as a result of correction is 99.1 mg/dL.

### [2] Other Embodiments

(2-1) With the measurement device 20 in the first embodiment, in the processing of (a) above, it is possible to measure the concentration accurately by measuring the current values under voltage values of two different levels, and determining the correction amount with respect to an interfering substance from the slope between these current values.

However, the present invention is not limited to this, and a correction amount may be selected on the basis of the slope obtained by obtaining current values under three or more different voltage values and subjecting these three or more current values to linear regression.

The more variety of voltage that is applied, the greater will be the accuracy.

(2-2) If three or more current values are obtained, the "slope" used in determining the correction amount can also be obtained by selecting some of these current values and subjecting them to linear regression.

(2-3) The correction amount can also be selected on the basis of the amount of change in the current value other than slope. For instance, current values may be measured under two voltage values, the difference between the two resulting current values calculated by the CPU, and the correction amount selected by the CPU on the basis of this difference.

(2-4) In the first embodiment, in the second step S2 and the fourth step S4, the voltage value was assumed to be constant within a single step. That is, in the first embodiment the second step S2 and the fourth step S4 were second voltage application steps of applying a second voltage, for obtaining a current value used in determining the correction amount, to a second electrode system (the second working electrode 11b and the counter electrode 11d). In other words, with the measurement device 20 in the first embodiment, in the second step S2 and the fourth step S4, a second voltage application operation is executed. In the first embodiment, the voltage v1 is applied as the second voltage, after the application of the voltage v1, the voltage v2 that is higher than the voltage v1 is applied.

However, the second voltage application operation, the second voltage application step, and the second voltage are not limited to the above. For example, the configuration may be such that the computer 206 sweeps the voltage applied to the second working electrode 11b from the reference voltage source 205. Specifically, the computer 206 may continuously vary the value of the second voltage. In particular, it is preferable if the voltage value is controlled so as to increase steadily with respect to the elapsed time. When sweeping is performed, the voltage values in the various steps are the same as discussed above.

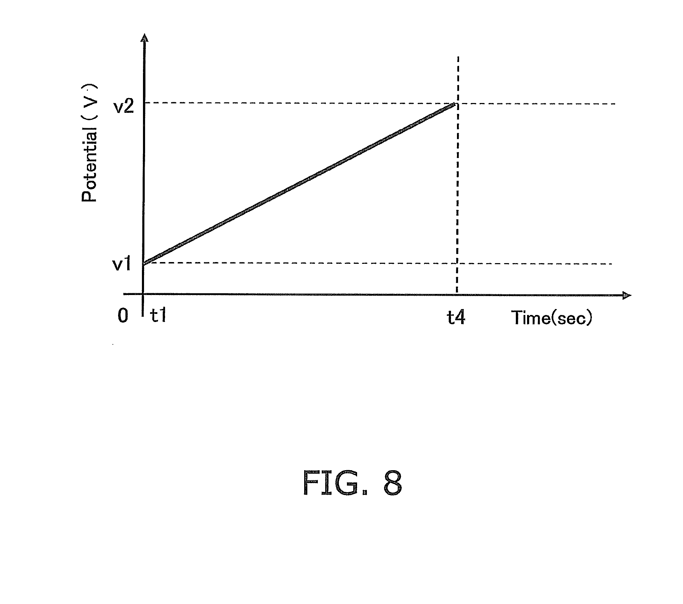

More specifically, as shown in FIG. 8, the voltage value is preferably controlled so that it increases linearly with respect to the elapsed time.

In FIG. 8, the times t2 and t3 are not depicted. Also, the time t1 is set to 0 (zero). What was the above about the voltage values v1 and v2 still applies here.

In this embodiment, the flow of detecting the target substance can be the same as in the first embodiment.

(2-5) Also, as discussed above, the correction amount is preferably determined from the amount of change between the peak current values, but the amount of change may be obtained on the basis of the current values at timings other than the peaks.

(2-6) Besides selecting from a table, the method for determining the correction amount and the tentative concentration can be to calculate it from a calibration curve or another such method.

(2-7) In the first embodiment, the first electrode system and second electrode system shared a single counter electrode 11d. However, the first electrode system and second electrode system may instead each have its own separate counter electrode.

(2-8) In the first embodiment, the reagent layer 12 is disposed so as not to be over the second working electrode 11b. However, a reagent layer that is different from the reagent layer used to detect the target substance may be disposed over the second working electrode. This different reagent layer may be referred to instead as "a reagent layer having a different composition," and examples of such a reagent layer include a reagent layer that does not contain an enzyme.

(2-9) In the first embodiment, the fifth step S5 and the seventh step S7 were executed as the first voltage application step. In other words, with the measurement device 20 of the first embodiment, in the fifth step S5 and the seventh step S7, a first voltage application operation is executed. The voltage Va is applied as the first voltage in the fifth step S5, and the voltage Vb that is lower than the voltage Va is applied in the subsequent seventh step S7. The concentration of the target substance is measured on the basis of the current value at the application of the voltage Vb.

However, the first voltage application operation, the first voltage application step, and the first voltage are not limited to the above, and can be modified to the extent that the concentration of the target substance can still be measured, according to the type of target substance, the structure of the biosensor, and other conditions.

### [3] Comparative Embodiment

A measurement system pertaining to a comparative embodiment will now be described. Those members having the same function as the members already described will be numbered the same and not described again.

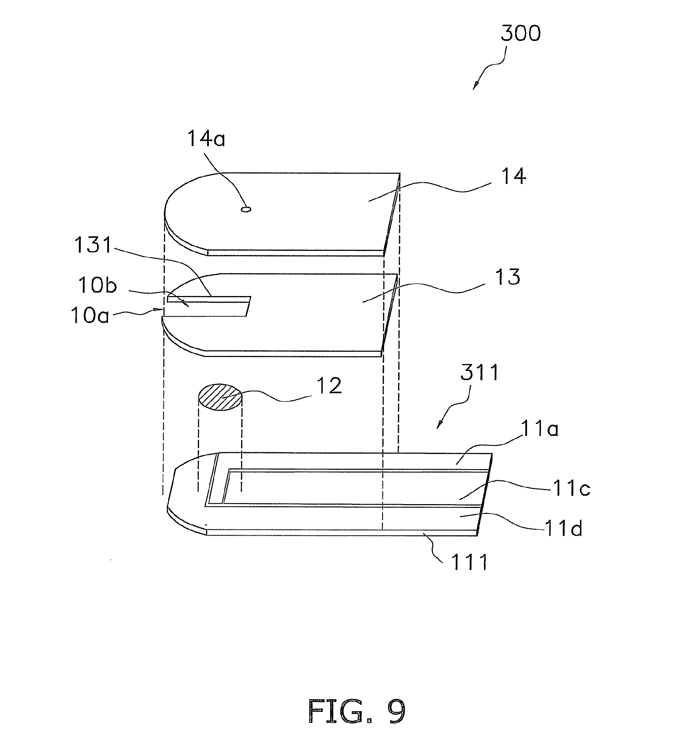

As shown in the exploded oblique view of FIG. 9, the biosensor 300 of this measurement system has the same constitution as the above-mentioned biosensor 10, except that it has a substrate 311 instead of the substrate 11. The substrate 311 has a first working electrode 11a, a detecting electrode 11c, and a counter electrode 11d, but not a second working electrode. Also, the reagent layer 12 is disposed so as to be in contact with the first working electrode 11a, the detecting electrode 11c, and the counter electrode 11d.

The measurement system of this embodiment also differs in the measurement operation of the measurement device (not shown).

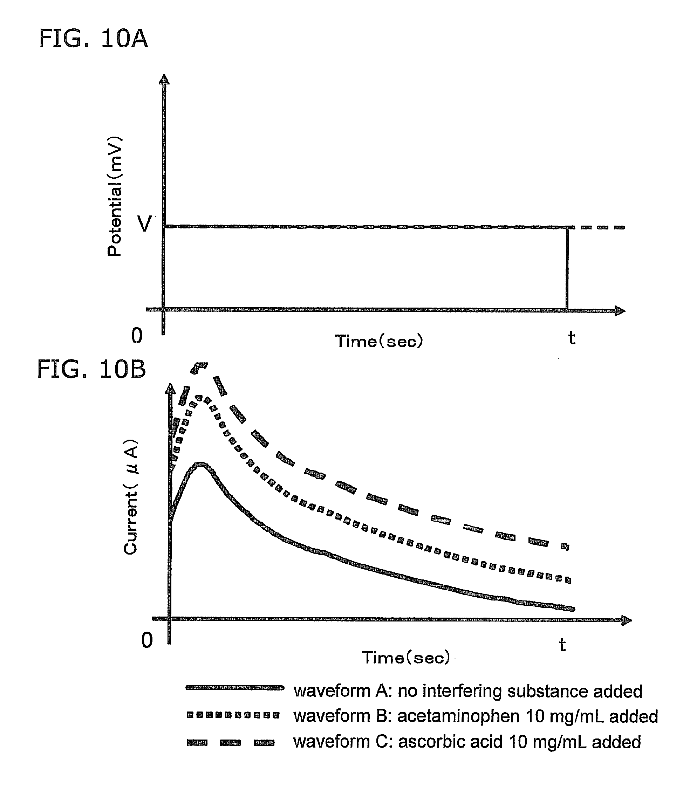

FIG. 10A shows the voltage profile during the measurement operation, and FIG. 10B shows a response curve. As shown in FIGS. 10A and 10B, the measurement device of this embodiment measures the current value under application of a constant voltage V, from time 0 up to time t.

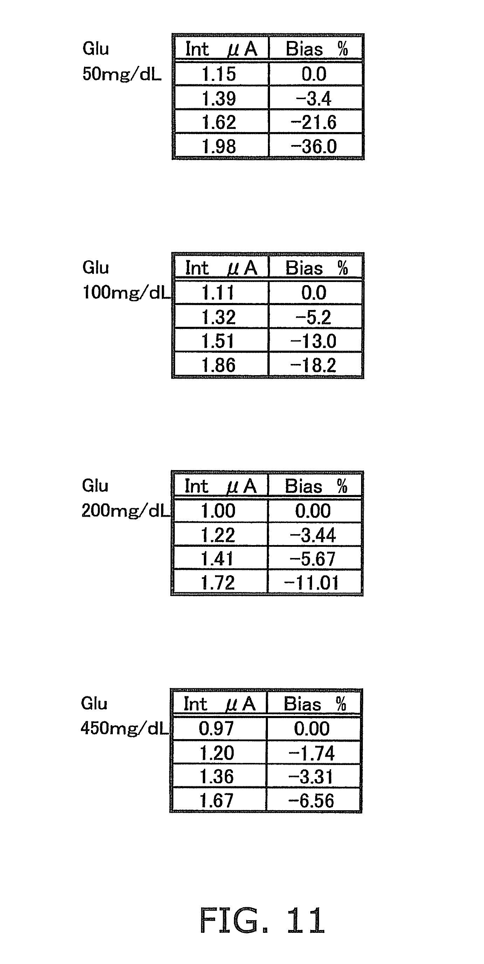

The CPU then obtains a tentative concentration by referring to a conversion table, on the basis of the current value in FIG. 10B. The CPU then selects a correction amount from the table shown in FIG. 11 on the basis of the final response value obtained at the time t, and corrects the tentative concentration.

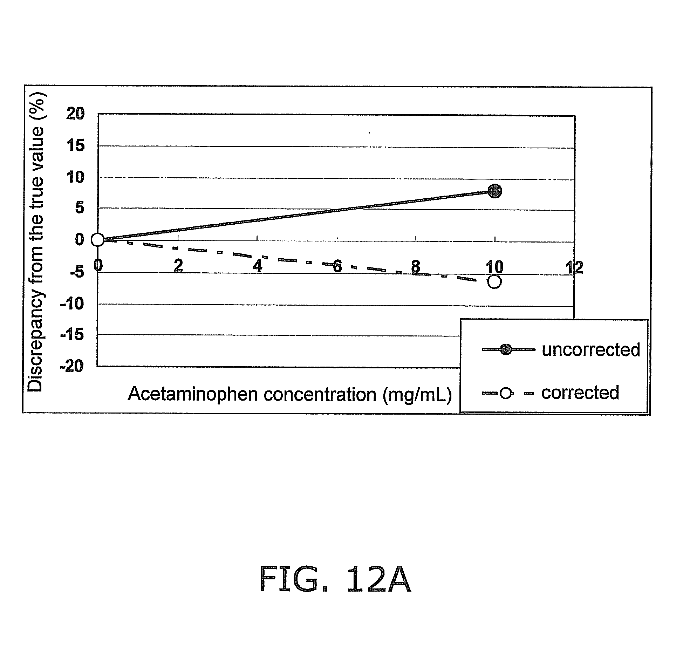

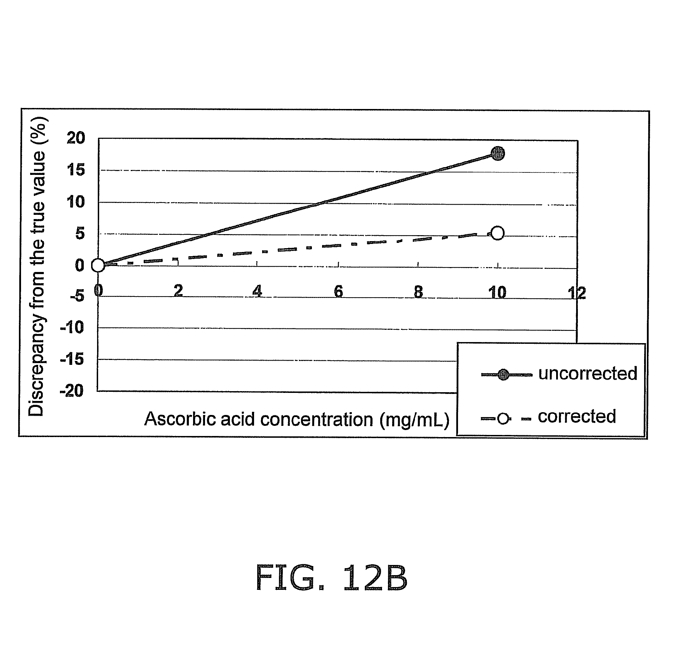

FIG. 12A shows the discrepancy from the true value (%) when the glucose concentration in an acetaminophen-containing sample is measured with the measurement system of this embodiment. FIG. 12B shows the discrepancy when ascorbic acid is used as the sample.

In this comparative embodiment, the proportions in which the acetaminophen-containing sample and the ascorbic acid-containing sample are contained in the liquid sample cannot be specified. Accordingly, correction had to be performed at the same correction amount, for which the proportions of the various interfering substances contained in the liquid sample was estimated ahead of time.

That is, even though the effect on the detection result for the target substance varies with the type of interfering substance in this comparative embodiment, correction is performed with the same correction amount, so as shown in FIG. 12A there is over-correction with the acetaminophen-containing sample, and as shown in FIG. 12B there is under-correction with the ascorbic acid-containing sample. As a result, there is greater discrepancy in the corrected value from the true value.

In contrast, in the working example given above, although the same table was used for both acetaminophen and ascorbic acid, the correction amount is selected on the basis of the slope of the current values, so a different correction amount can be selected according to the interfering substance, and this allows a more appropriate correction to be performed.

## Claims

1. A measurement device (20) for measuring the concentration of a target substance in a sample deposited on a biosensor (10) having first (11a, 11d) and second (11b.11d) electrode systems, the measurement
device comprising:
a mounting component (22) configured to be mounted with the biosensor;
a voltage application component (205,206) configured to perform a first voltage application operation of applying a first voltage to the first electrode system, and a second voltage application operation of applying at least two kinds of second voltage of mutually different levels at mutually different timings to the second electrode system;
a concentration acquisition component (206) configured to acquire the concentration of the target substance on the basis of the current value of the first electrode system when the first voltage is applied; and
a correction component (206) configured to correct the concentration acquired by the concentration acquisition component on the basis of the amount of change in current value of the second electrode system between the at least two different timings during the second voltage application operation.

2. The measurement device according to Claim 1,
wherein the voltage application component is configured to apply a voltage of a certain level, and then apply a voltage that is higher than the certain level, as the second voltages.

3. A measurement device (20) for measuring the concentration of a target substance in a sample deposited on a biosensor (10) having first (11a, 11d) and second (11b, 11d) electrode systems, the measurement
device comprising:
a mounting component (22) configured to be mounted with the biosensor;
a voltage application component (205, 206) configured to perform a first voltage application operation of applying a first voltage to the first electrode system, and a second voltage application operation of applying a second voltage to the second electrode system, the second voltage is a sweep voltage;
a concentration acquisition component (206) configured to acquire the concentration of the target substance on the basis of the current value of the first electrode system when the first voltage is applied; and
a correction component (206) configured to correct the concentration acquired by the concentration acquisition component on the basis of the amount of change in current value of the second electrode system attributable to sweep of the second voltage.

4. The measurement device according to Claim 3,
wherein the voltage application component is configured to increase the level of the second voltage over time.

5. The measurement device according to Claim 4,
wherein the voltage application component is configured to increase the level of the second voltage linearly over time.

6. The measurement device according to any of Claims 1 to 5,
wherein the voltage application component is configured to apply a voltage of a certain level , and then apply a voltage that is lower, as the first voltages, and
the concentration acquisition component is configured to acquire the concentration of the target substance on the basis of the current value of the first electrode system during application of the lower voltage out of the first voltages.

7. The measurement device according to any of Claims 1 to 6,
wherein the correction component is configured to perform correction on the basis of the amount of change per unit of time between current values measured under voltages of different level.

8. The measurement device according to any of Claims 1 to 7,
wherein the correction component comprises:
a memory having a plurality of correction amounts; and
a correction amount selector configured to select a correction amount to be used in the correction from among the correction amounts in the memory, according to the amount of change.

9. The measurement device according to any of Claims 1 to 7,
wherein the correction component comprises:
a memory having a plurality of correction amounts; and
a correction amount selector configured to select a correction amount to be used in the correction from among the correction amounts in the memory, according to the amount of change and the concentration acquired by the concentration acquisition component.

10. A measurement system, (100) comprising:
a biosensor (10) having first and second electrode systems; and
the measurement device according to any of Claims 1 to 9.

11. The measurement system according to Claim 10,
wherein the first electrode system has a first working electrode and a counter electrode,
the second electrode system has a second working electrode and the counter electrode, and
the biosensor further has a reagent layer disposed over at least the first working electrode, and another reagent layer that is disposed over the second working electrode and includes a different reagent from that of the reagent layer over the first working electrode.

12. The measurement system according to Claim 10,
wherein the first electrode system has a first working electrode and a counter electrode,
the second electrode system has a second working electrode and the counter electrode, and
the biosensor further comprises a reagent layer that is disposed over at least the first working electrode and is not disposed over the second working electrode.

13. The measurement system according to Claim 10 or 11,
wherein the biosensor further comprises a sample supply path arranged to supply a liquid of the sample to the first and second electrode systems, and a sample introduction port arranged to introduce the liquid of the sample into the sample supply path, and
the first electrode system is disposed at a position along the sample supply path, the position is farther away from the sample introduction port than the second electrode system.

14. The measurement system according to any of Claims 10 to 13,
wherein the target substance is at least one substance selected from the group consisting of glucose, lactic acid, uric acid, bilirubin, and cholesterol.

15. The measurement system according to Claim 11 or 12,
wherein the reagent layer disposed over the first electrode system contains an oxidoreductase,
the target substance is glucose, and
the oxidoreductase is at least one enzyme of glucose oxidase and glucose dehydrogenase.

16. A concentration measurement method used in a measurement device for measuring the concentration of a target substance in a sample deposited on a biosensor having first and second electrode systems, the method comprising:
a first voltage application step of applying a first voltage to the first electrode system;
a concentration acquisition step of acquiring the concentration of the target substance on the basis of the current value of the first electrode system in the first voltage application step;
a second voltage application step of applying at least two kinds of second voltage of mutually different levels at mutually different timings to the second electrode system; and
a correction step of correcting the concentration acquired in the concentration acquisition step on the basis of the amount of change in the current value of the second electrode system between the at least two different timings during the second voltage application step.

17. The concentration measurement method according to Claim 16,
wherein, in the second voltage application step, a voltage of a certain level is applied, after which a voltage that is higher is applied, as the second voltages.

18. A concentration measurement method used in a measurement device for measuring the concentration of a target substance in a sample deposited on a biosensor having first and second electrode systems, the method comprising:
a first voltage application step of applying a first voltage to the first electrode system;
a concentration acquisition step of acquiring the concentration of the target substance on the basis of the current value of the first electrode system in the first voltage application step;
a second voltage application step of applying a second voltage that is a sweep voltage to the second electrode system; and
a correction step of correcting the concentration acquired in the concentration acquisition step on the basis of the amount of change in the current value of the second electrode system attributable to sweep of the second voltage.

19. The concentration measurement method according to Claim 18,
wherein, in the second voltage application step, the level of the second voltage is increased over time.

20. The concentration measurement method according to Claim 19,
wherein, in the second voltage application step, the level of the second voltage is increased linearly over time.

21. The concentration measurement method according to any of Claims 16 to 20,
wherein, in the first voltage application step, a voltage of a certain level is applied, after which a voltage that is lower is applied, as the first voltages, and
the concentration of the target substance is acquired on the basis of the current value of the first electrode system during application of the lower voltage out of the first voltages.

22. The concentration measurement method according to any of Claims 16 to 21,
wherein, in the correction step, the correction is performed on the basis of the amount of change per unit of time between current values measured under voltages of different level.

23. The concentration measurement method according to any of Claims 16 to 22,
wherein the correction step includes a correction amount selection step of selecting a correction amount corresponding to the amount of change from among a plurality of correction amounts, according to the amount of change.

24. The concentration measurement method according to any of Claims 16 to 23,
further comprising a correction amount selection step of selecting an amount of the correction according to the amount of change and the concentration obtained in the concentration acquisition step.

25. The concentration measurement method according to any of Claims 16 to 24,
wherein the target substance is at least one substance selected from the group consisting of glucose, lactic acid, uric acid, bilirubin, and cholesterol.

## Patentansprüche

1. Messvorrichtung (20) zum Messen der Konzentration einer Zielsubstanz in einer Probe, die auf einem Biosensor (10) mit ersten (11a, 11d) und zweiten (11b, 11d) Elektrodensystemen angeordnet ist, wobei die Messvorrichtung umfasst:
eine Anbringkomponente (22), die ausgestaltet ist, dass an ihr der Biosensor angebracht werden kann,
eine Spannungsanlegekomponente (205, 206), die ausgestaltet ist, eine erste Spannungsanlageoperation des Anlegens einer ersten Spannung an das erste Elektrodensystem und eine zweite Spannungsanlageoperation des Anlegens von wenigstens zwei Arten zweiter Spannung mit zueinander unterschiedlichen Niveaus zu zueinander unterschiedlichen Zeitpunkten an das zweite Elektrodensystem durchzuführen,
eine Konzentrationsbeschaffungskomponente (206), die ausgestaltet ist, die Konzentration der Zielsubstanz auf Basis des Stromwertes des ersten Elektrodensystems zu beschaffen, wenn die erste Spannung angelegt wird, und
eine Korrekturkomponente (206), die ausgestaltet ist, die Konzentration, die von der Konzentrationsbeschaffungskomponente beschafft wurde, auf Basis des Ausmaßes der Änderung im Stromwert des zweiten Elektrodensystems zwischen den wenigstens zwei unterschiedlichen Zeitpunkten während der zweiten Spannungsanlageoperation zu korrigieren.

2. Messvorrichtung nach Anspruch 1,
wobei die Spannungsanlegekomponente ausgestaltet ist, als die zweiten Spannungen eine Spannung eines bestimmten Niveaus anzulegen und dann eine Spannung anzulegen, die höher ist als das bestimmte Niveau.

3. Messvorrichtung (20) zum Messen der Konzentration einer Zielsubstanz in einer Probe, die auf einem Biosensor (10) mit ersten (11a, 11d) und zweiten (11b, 11d) Elektrodensystemen aufgebracht ist, wobei die Messvorrichtung umfasst:
eine Anbringkomponente (22), die dazu ausgestaltet ist, dass an ihr der Biosensor angebracht werden kann,
eine Spannungsanlegekomponente (205, 206), die ausgestaltet ist, eine erste Spannungsanlageoperation des Anlegens einer ersten Spannung an das erste Elektrodensystem und eine zweite Spannungsanlageoperation des Anlegens einer zweiten Spannung an das zweite Elektrodensystem durchzuführen, wobei die zweite Spannung eine Durchlaufspannung ist,
eine Konzentrationsbeschaffungskomponente (206), die ausgestaltet ist, die Konzentration der Zielsubstanz auf Basis des Stromwerts des ersten Elektrodensystems zu beschaffen, wenn die erste Spannung angelegt wird, und
eine Korrekturkomponente (206), die ausgestaltet ist, die Konzentration, die von der Konzentrationsbeschaffungskomponente beschafft wurde, auf Basis des Ausmaßes einer Änderung im Stromwert des zweiten Elektrodensystems zu korrigieren, die dem Durchlauf der zweiten Spannung zuordenbar ist.

4. Messvorrichtung nach Anspruch 3,
wobei die Spannungsanlegekomponente ausgestaltet ist, das Niveau der zweiten Spannung mit der Zeit zu erhöhen.

5. Messvorrichtung nach Anspruch 4,
wobei die Spannungsanlegekomponente ausgestaltet ist, das Niveau der zweiten Spannung linear mit der Zeit zu erhöhen.

6. Messvorrichtung nach einem der Ansprüche 1 bis 5,
wobei die Spannungsanlegekomponente ausgestaltet ist, als die ersten Spannungen eine Spannung eines bestimmten Niveaus anzulegen und dann eine Spannung anzulegen, die geringer ist, und
die Konzentrationsbeschaffungskomponente ausgestaltet ist, die Konzentration der Zielsubstanz auf Basis des Stromwerts des ersten Elektrodensystems während des Anlegens der geringeren Spannung aus den ersten Spannungen zu beschaffen.

7. Messvorrichtung nach einem der Ansprüche 1 bis 6,
wobei die Korrekturkomponente ausgestaltet ist, eine Korrektur auf Basis des Ausmaßes einer Änderung pro Zeiteinheit zwischen Stromwerten durchzuführen, die unter Spannungen von unterschiedlichem Niveau gemessen wurden.

8. Messvorrichtung nach einem der Ansprüche 1 bis 7,
wobei die Korrekturkomponente umfasst:
einen Speicher mit mehreren Korrekturausmaßen und
einen Korrekturausmaßauswähler, der ausgestaltet ist, ein Korrekturausmaß aus den Korrekturausmaßen in dem Speicher entsprechend dem Ausmaß an Änderung auszuwählen, das in der Korrektur zu verwenden ist.

9. Messvorrichtung nach einem der Ansprüche 1 bis 7,
wobei die Korrekturkomponente umfasst:
einen Speicher mit mehreren Korrekturausmaßen und
einen Korrekturausmaßauswähler, der ausgestaltet ist, ein Korrekturausmaß aus den Korrekturausmaßen in dem Speicher entsprechend dem Ausmaß an Änderung und der Konzentration, die durch die Konzentrationsbeschaffungskomponente beschafft wurde, auszuwählen, das in der Korrektur zu verwenden ist.

10. Messsystem (100), mit:
einem Biosensor (10) mit ersten und zweiten Elektrodensystemen und
der Messvorrichtung nach einem der Ansprüche 1 bis 9.

11. Messsystem nach Anspruch 10,
wobei das erste Elektrodensystem eine erste Arbeitselektrode und eine Gegenelektrode aufweist,
das zweite Elektrodensystem eine zweite Arbeitselektrode und die Gegenelektrode aufweist, und
der Biosensor ferner eine Reagenzschicht, die über wenigstens der ersten Arbeitselektrode angeordnet ist, und eine andere Reagenzschicht aufweist, die über der zweiten Arbeitselektrode angeordnet ist und ein anderes Reagenz als das der Reagenzschicht über der ersten Arbeitselektrode aufweist.

12. Messsystem nach Anspruch 10,
wobei das erste Elektrodensystem eine erste Arbeitselektrode und eine Gegenelektrode aufweist,
das zweite Elektrodensystem eine zweite Arbeitselektrode und die Gegenelektrode aufweist und
der Biosensor ferner eine Reagenzschicht aufweist, die über wenigstens der ersten Arbeitselektrode angeordnet ist und die nicht über der zweiten Arbeitselektrode angeordnet ist.

13. Messsystem nach Anspruch 10 oder 11,
wobei der Biosensor ferner einen Probenzuführpfad aufweist, der ausgestaltet ist, eine Flüssigkeit der Probe dem ersten und zweiten Elektrodensystem zuzuführen, und eine Probeneinführöffnung, die ausgestaltet ist, die Flüssigkeit der Probe in den Probenzuführpfad einzubringen, und
das erste Elektrodensystem an einer Position entlang des Probenzuführpfades angeordnet ist, wobei die Position weiter von der Probeneinführöffnung entfernt ist als das zweite Elektrodensystem.

14. Messsystem nach einem der Ansprüche 10 bis 13,
wobei die Zielsubstanz wenigstens eine Substanz ausgewählt aus der Gruppe bestehend aus Glukose, Milchsäure, Harnsäure, Bilirubin, und Cholesterin ist.

15. Messsystem nach Anspruch 11 oder 12,
wobei die Reagenzschicht, die über dem ersten Elektrodensystem angeordnet ist, eine Oxydreduktase aufweist,
die Zielsubstanz Glukose ist und
die Oxidreduktase wenigstens ein Enzym von Glukoseoxidase und Glukosedehydrogenase ist.

16. Konzentrationsmessverfahren, das in einer Messvorrichtung zum Messen der Konzentration einer Zielsubstanz in einer Probe verwendet wird, die auf einem Biosensor mit einem ersten und einem zweiten Elektrodensystem angeordnet ist, wobei das Verfahren umfasst:
einen ersten Spannungsanlageschritt des Anlegens einer ersten Spannung an das erste Elektrodensystem,
einen Konzentrationsbeschaffungsschritt des Beschaffens der Konzentration der Zielsubstanz auf Basis des Stromwerts des ersten Elektrodensystems in dem ersten Spannungsanlageschritt,
einen zweiten Spannungsanlageschritt des Anlegens von wenigstens zwei Arten von zweiter Spannung mit gegeneinander unterschiedlichen Niveaus zu gegeneinander unterschiedlichen Zeitpunkten an das zweite Elektrodensystem und
einen Korrekturschritt des Korrigierens der Konzentration, die in dem Konzentrationsbeschaffungsschritt beschafft wurde, auf Basis des Ausmaßes an Änderung im Stromwert des zweiten Elektrodensystems zwischen den wenigstens zwei unterschiedlichen Zeitpunkten während des zweiten Spannungsanlageschritts.

17. Konzentrationsmessverfahren nach Anspruch 16,
wobei in dem zweiten Spannungsanlageschritt als die zweiten Spannungen eine Spannung eines bestimmten Niveaus angelegt wird, nach der eine Spannung angelegt wird, die höher ist.

18. Konzentrationsmessverfahren, das in einer Messvorrichtung zum Messen der Konzentration einer Zielsubstanz in einer Probe verwendet wird, die auf einem Biosensor mit einem ersten und einem zweiten Elektrodensystem angeordnet ist, wobei das Verfahren umfasst:
einen ersten Spannungsanlageschritt des Anlegens einer ersten Spannung an das erste Elektrodensystem,
einen Konzentrationsbeschaffungsschritt des Beschaffens der Konzentration der Zielsubstanz auf Basis des Stromwerts des ersten Elektrodensystems in dem ersten Spannungsanlegeschritt,
einen zweiten Spannungsanlegeschritt des Anlegens einer zweiten Spannung an das zweite Elektrodensystem, die eine Durchlaufspannung ist, und
einen Korrekturschritt des Korrigierens der Konzentration, die in dem Konzentrationsbeschaffungsschritt beschafft wurde, auf Basis des Ausmaßes an Änderung im Stromwert des zweiten Elektrodensystems, das dem Durchlauf der zweiten Spannung zuordenbar ist.

19. Konzentrationsmessverfahren nach Anspruch 18,
wobei im zweiten Spannungsanlageschritt das Niveau der zweiten Spannung mit der Zeit erhöht wird.

20. Konzentrationsmessverfahren nach Anspruch 19,
wobei in dem zweiten Spannungsanlageschritt das Niveau der zweiten Spannung linear mit der Zeit erhöht wird.

21. Konzentrationsmessverfahren nach einem der Ansprüche 16 bis 20,
wobei in dem ersten Spannungsanlegeschritt als die ersten Spannungen eine Spannung eines bestimmten Niveaus und danach eine Spannung angelegt werden, die niedriger ist, und
die Konzentration der Zielsubstanz auf Basis des Stromwertes des ersten Elektrodensystems während des Anlegens der geringeren Spannung der ersten Spannungen beschafft wird.

22. Konzentrationsmessverfahren nach einem der Ansprüche 16 bis 21,
wobei in dem Korrekturschritt die Korrektur auf Basis des Ausmaßes einer Änderung pro Zeiteinheit zwischen Stromwerten durchgeführt wird, die unter Spannungen von unterschiedlichem Niveau gemessen wurden.

23. Konzentrationsmessverfahren nach einem der Ansprüche 16 bis 22,
wobei der Korrekturschritt einen Korrekturausmaßauswahlschritt des Auswählens eines Korrekturausmaßes entsprechend des Ausmaßes an Änderung aus mehreren Korrekturausmaßen entsprechend dem Änderungsausmaß aufweist.

24. Konzentrationsmessverfahren nach einem der Ansprüche 16 bis 23,
ferner mit einem Korrekturausmaßauswahlschritt des Auswählens eines Ausmaßes der Korrektur entsprechend dem Ausmaß an Änderung und der Konzentration, die in dem Konzentrationsbeschaffungsschritt beschafft wurde.

25. Konzentrationsmessverfahren nach einem der Ansprüche 16 bis 24,
wobei die Zielsubstanz wenigstens eine Substanz ist, ausgewählt aus der Gruppe bestehend aus Glukose, Milchsäure, Harnsäure, Bilirubin und Cholesterin.

## Revendications

1. Dispositif de mesure (20) pour mesurer la concentration d'une substance cible dans un échantillon déposé sur un biocapteur (10) ayant des premier (11a, 11d) et deuxième (11b, 11d) systèmes d'électrodes, le dispositif de mesure comprenant:
un composant de montage (22) configuré pour pouvoir monter sur celui-ci le biocapteur,
un composant d'application de tension (205, 206) configuré pour effectuer une première opération d'application de tension consistant à appliquer une première tension au premier système d'électrodes, et une seconde opération d'application de tension consistant à appliquer au deuxième système d'électrodes au moins deux types de seconde tension de niveaux mutuellement différents, à des instants mutuellement différents,
un composant d'acquisition de concentration (206) configuré pour acquérir la concentration de la substance cible sur la base de la valeur de courant du premier système d'électrodes lorsque la première tension est appliquée, et
un composant de correction (206) configuré pour corriger la concentration acquise par le composant d'acquisition de concentration, sur la base de l'étendue du changement de la valeur de courant du deuxième système d'électrodes entre lesdits au moins deux instants différents durant la seconde opération d'application de tension.

2. Dispositif de mesure selon la revendication 1,
dans lequel le composant d'application de tension est configuré pour appliquer, en tant que secondes tensions, une tension d'un certain niveau et puis une tension qui est supérieure audit certain niveau.

3. Dispositif de mesure (20) pour mesurer la concentration d'une substance cible dans un échantillon déposé sur un biocapteur (10) ayant des premier (11a, 11d) et deuxième (11b, 11d) systèmes d'électrodes, le dispositif de mesure comprenant:
un composant de montage (22) configuré pour pouvoir monter sur celui-ci le biocapteur,
un composant d'application de tension (205, 206) configuré pour effectuer une première opération d'application de tension consistant à appliquer une première tension au premier système d'électrodes, et une seconde opération d'application de tension consistant à appliquer une seconde tension au deuxième système d'électrodes, la seconde tension étant une tension de balayage,
un composant d'acquisition de concentration (206) configuré pour acquérir la concentration de la substance cible sur la base de la valeur de courant du premier système d'électrodes lorsque la première tension est appliquée, et
un composant de correction (206) configuré pour corriger la concentration acquise par le composant d'acquisition de concentration, sur la base de l'étendue d'un changement de la valeur de courant du deuxième système d'électrodes, qui est attribuable au balayage de la seconde tension.

4. Dispositif de mesure selon la revendication 3,
dans lequel le composant d'application de tension est configuré pour augmenter le niveau de la seconde tension avec le temps.

5. Dispositif de mesure selon la revendication 4,
dans lequel le composant d'application de tension est configuré pour augmenter le niveau de la seconde tension de façon linéaire avec le temps.

6. Dispositif de mesure selon l'une quelconque des revendications 1 à 5,
dans lequel le composant d'application de tension est configuré pour appliquer, en tant que premières tensions, une tension d'un certain niveau et puis une tension qui est plus faible, et
le composant d'acquisition de concentration est configuré pour acquérir la concentration de la substance cible sur la base de la valeur de courant du premier système d'électrodes pendant l'application de la tension plus faible des premières tensions.

7. Dispositif de mesure selon l'une quelconque des revendications 1 à 6,
dans lequel le composant de correction est configuré pour effectuer une correction sur la base de l'étendue d'un changement par unité de temps entre des valeurs de courant mesurées sous des tensions de niveau différent.

8. Dispositif de mesure selon l'une quelconque des revendications 1 à 7,
dans lequel le composant de correction comprend:
une mémoire ayant une pluralité d'étendues de correction et
un sélecteur d'étendue de correction configuré pour sélectionner, parmi les étendues de correction dans la mémoire, en fonction de l'étendue de changement, une étendue de correction à utiliser dans la correction.

9. Dispositif de mesure selon l'une quelconque des revendications 1 à 7,
dans lequel le composant de correction comprend:
une mémoire ayant une pluralité d'étendues de correction et
un sélecteur d'étendue de correction configuré pour sélectionner, parmi les étendues de correction dans la mémoire, en fonction de l'étendue de changement et de la concentration acquise par le composant d'acquisition de concentration, une étendue de correction à utiliser dans la correction.

10. Système de mesure (100) comprenant:
un biocapteur (10) ayant des premier et deuxième systèmes d'électrodes, et
le dispositif de mesure selon l'une quelconque des revendications 1 à 9.

11. Système de mesure selon la revendication 10,
dans lequel le premier système d'électrodes comprend une première électrode de travail et une contre-électrode,
le deuxième système d'électrodes comprend une seconde électrode de travail et la contre-électrode, et
le biocapteur comprend en outre une couche de réactif qui est disposée sur au moins la première électrode de travail, et une autre couche de réactif qui est disposée sur la seconde électrode de travail et comprend un réactif différent de celui de la couche de réactif sur la première électrode de travail.

12. Système de mesure selon la revendication 10,
dans lequel le premier système d'électrodes comprend une première électrode de travail et une contre-électrode,
le deuxième système d'électrodes comprend une seconde électrode de travail et la contre-électrode, et
le biocapteur comprend en outre une couche de réactif qui est disposée sur au moins la première électrode de travail et qui n'est pas disposée sur la seconde électrode de travail.

13. Système de mesure selon la revendication 10 ou 11,
dans lequel le biocapteur comprend en outre un trajet d'alimentation en échantillon agencé pour fournir un liquide de l'échantillon aux premier et deuxième systèmes d'électrodes, ainsi qu'un orifice d'introduction d'échantillon agencé pour introduire le liquide de l'échantillon dans le trajet d'alimentation en échantillon, et
le premier système d'électrodes est disposé sur une position le long du trajet d'alimentation en échantillon, la position étant plus éloignée de l'orifice d'introduction d'échantillon que le deuxième système d'électrodes.

14. Système de mesure selon l'une quelconque des revendications 10 à 13,
dans lequel la substance cible est au moins une substance choisie dans le groupe constitué par le glucose, l'acide lactique, l'acide urique, la bilirubine, et le cholestérol.

15. Système de mesure selon la revendication 11 ou 12,
dans lequel la couche de réactif disposée sur le premier système d'électrodes contient une oxydoréductase,
la substance cible est le glucose et
l'oxydoréductase est au moins une enzyme de la glucose oxydase et de la glucose déshydrogénase.

16. Procédé de mesure de concentration utilisé dans un dispositif de mesure pour mesurer la concentration d'une substance cible dans un échantillon déposé sur un biocapteur ayant des premier et deuxième systèmes d'électrodes, le procédé comprenant:
une première étape d'application de tension consistant à appliquer une première tension au premier système d'électrodes,
une étape d'acquisition de concentration consistant à acquérir la concentration de la substance cible sur la base de la valeur de courant du premier système d'électrodes dans la première étape d'application de tension,
une deuxième étape d'application de tension consistant à appliquer au deuxième système d'électrodes au moins deux types de seconde tension de niveaux mutuellement différents, à des instants mutuellement différents, et
une étape de correction consistant à corriger la concentration acquise dans l'étape d'acquisition de concentration, sur la base de l'étendue de changement de la valeur de courant du deuxième système d'électrodes entre lesdits au moins deux instants différents durant la seconde étape d'application de tension.

17. Procédé de mesure de concentration selon la revendication 16,
dans lequel, dans la seconde étape d'application de tension, on applique, en tant que secondes tensions, une tension d'un certain niveau et après celle-ci une tension qui est plus élevée.

18. Procédé de mesure de concentration utilisé dans un dispositif de mesure pour mesurer la concentration d'une substance cible dans un échantillon déposé sur un biocapteur ayant des premier et deuxième systèmes d'électrodes, le procédé comprenant:
une première étape d'application de tension consistant à appliquer une première tension au premier système d'électrodes,
une étape d'acquisition de concentration consistant à acquérir la concentration de la substance cible sur la base de la valeur de courant du premier système d'électrodes dans la première étape d'application de tension,
une deuxième étape d'application de tension consistant à appliquer une seconde tension au deuxième système d'électrodes, qui est une tension de balayage, et
une étape de correction consistant à corriger la concentration acquise dans l'étape d'acquisition de concentration, sur la base de l'étendue de changement de la valeur de courant du deuxième système d'électrodes, qui est attribuable au balayage de la seconde tension.

19. Procédé de mesure de concentration selon la revendication 18,
dans lequel, dans la deuxième étape d'application de tension, le niveau de la seconde tension est augmenté avec le temps.

20. Procédé de mesure de concentration selon la revendication 19,
dans lequel, dans la deuxième étape d'application de tension, le niveau de la seconde tension est augmenté de façon linéaire avec le temps.

21. Procédé de mesure de concentration selon l'une quelconque des revendications 16 à 20,
dans lequel, dans la première étape d'application de tension, on applique, en tant que premières tensions, une tension d'un certain niveau et après celle-ci une tension qui est plus faible, et
la concentration de la substance cible est acquise sur la base de la valeur de courant du premier système d'électrodes pendant l'application de la tension plus faible des premières tensions.

22. Procédé de mesure de concentration selon l'une quelconque des revendications 16 à 21,
dans lequel, dans l'étape de correction, la correction est réalisée sur la base de l'étendue d'un changement par unité de temps entre des valeurs de courant mesurées sous des tensions de niveau différent.

23. Procédé de mesure de concentration selon l'une quelconque des revendications 16 à 22,
dans lequel l'étape de correction comprend une étape de sélection d'étendue de correction consistant à sélectionner une étendue de correction correspondant à l'étendue de changement, parmi une pluralité d'étendues de correction, selon l'étendue de changement.

24. Procédé de mesure de concentration selon l'une quelconque des revendications 16 à 23,
comprenant en outre une étape de sélection d'étendue de correction consistant à sélectionner une étendue de la correction en fonction de l'étendue de changement et de la concentration acquise dans l'étape d'acquisition de concentration.

25. Procédé de mesure de concentration selon l'une quelconque des revendications 16 à 24,
dans lequel la substance cible est au moins une substance choisie dans le groupe constitué par le glucose, l'acide lactique, l'acide urique, la bilirubine, et le cholestérol.
